# DEMANDE DE BREVET EUROPEEN

(11) **EP 0 656 526 A1**
(43) Date de publication de la demande: **07.06.1995**
(21) Numéro de dépôt: 94402762.2
(22) Date de dépôt: 02.12.1994
(51) Int. Cl.: G01D 5/14, F02P 7/06, F02B 77/08, F01L 1/46

(54) **Dispositif de détection de la position angulaire d'un arbre à cames de moteur à combustion interne**

(30) Priorité: 03.12.1993 FR 9314509
(71) Demandeur: REGIE NATIONALE DES USINES RENAULT, F-92109 Boulogne-Billancourt (FR)
(72) Inventeur: Leclerc, Marc, F-93400 Saint-Ouen (FR)
(74) Mandataire: Fernandez, Francis Lionel

(57) **Abrégé**

Dispositif de détection de la position angulaire d'un arbre à cames (2) de moteur à combustion interne, comprenant un capteur du type à effet Hall (4) destiné à être monté dans un logement (5) correspondant du moteur pour détecter le passage d'une cible (3) en matériau magnétique solidaire dudit arbre à cames (2), caractérisé en ce que le capteur (4) coopère avec des moyens élastiques de poussée (6) destinés à venir plaquer le capteur contre la cible (3) lors de la mise en place dudit capteur (4) dans son logement (5).

## Description

La présente invention concerne un dispositif de détection de la position angulaire d'un arbre à cames de moteur à combustion interne.

Il est connu par le document FR-A-2.622.926 d'utiliser un dispositif de détection de la position angulaire d'un arbre à cames pour suivre le déroulement du cycle moteur dans chacun des cylindres de façon à commander avec précision les instants d'injection du carburant. Un tel dispositif s'avère indispensable notamment lorsqu'on souhaite mettre en oeuvre une stratégie d'injection du type séquentielle phasée.

En effet, les systèmes d'injection de type séquentielle phasée ont besoin de connaître avec exactitude le déroulement du cycle moteur dans chacun des cylindres, pour permettre à la centrale électronique de contrôle moteur de calculer et de commander le débit de chaque injecteur à un moment adéquat prédéterminé, et notamment en dehors de la période d'ouverture de la soupape correspondante.

Il est classique, comme cela est divulgué dans la demande de brevet français FR-A-2.441.829, de repérer, sur un disque (ou cible) solidaire du vilebrequin, les zones de position angulaire correspondantes à une phase déterminée de la course des différents pistons. Le disque présente des éléments de repérage disposés le long de sa périphérie, telles que des dents de longueurs différentes, et qui en passant devant un organe récepteur fixe, génèrent des impulsions électriques permettant de produire un signal repérant le passage à la position Point Mort Haut d'un piston déterminé.

Un tel dispositif de détection de la position angulaire du vilebrequin s'avère toutefois insuffisant pour suivre le déroulement complet du cycle pour un moteur à quatre temps. En effet, pour un moteur à combustion interne à quatre temps, le vilebrequin exécute deux tours complets (ou 720° d'angle), avant qu'un piston donné se retrouve dans la même position de fonctionnement dans le cycle moteur. Il en résulte qu'à partir de la seule observation de la rotation de la cible portée par le vilebrequin, il n'est, à priori, pas possible de fournir une information sur chaque cylindre sans une indétermination de deux temps moteur dans le cycle (le repérage de la position Point Mort Haut recouvrant aussi bien la phase admission que la phase explosion).

La détermination précise de la position de chaque cylindre dans le cycle ne pouvant être déduit de la seule rotation du vilebrequin, la recherche d'informations complémentaires est donc nécessaire pour savoir si le cylindre est dans la première ou dans la seconde moitié du cycle moteur (phases admission puis compression durant le premier tour vilebrequin, phases explosion et détente lors du second tour).

Afin d'obtenir de telles informations complémentaires, on a donc utilisé des éléments de repérage portés par un disque émetteur qui tourne deux fois moins vite que le vilebrequin. A cet effet on a disposé un tel disque émetteur sur l'arbre à cames ou bien sur l'arbre du répartiteur d'allumage qui est entraîné par l'intermédiaire d'un réducteur de rapport 1/2 à partir du vilebrequin.

Selon l'art antérieur connu, l'arbre à cames est donc équipé d'une cible portant un repère qui coopère avec un capteur fixe pour délivrer un signal fréquentiel valant "1" pendant la première moitié du cycle et "0" pendant la seconde moitié. La combinaison de ce signal à celui délivré par le capteur vilebrequin permet alors de suivre parfaitement le déroulement du cycle moteur dans un cylindre prédéterminé et par déduction dans tous les autres.

Le recours à un dispositif de détection de la position angulaire de l'arbre à cames soulève toutefois certaines difficultés d'installation qui complique et renchérit une telle utilisation. En effet, un dispositif de détection de la position angulaire de l'arbre à cames emploie classiquement un capteur du type à effet Hall. Un tel capteur est monté fixe dans un logement correspondant porté par la culasse du moteur de façon à ce que sa partie active puisse faire face à la cible portée par l'arbre à cames, avec une valeur d'entrefer prédéterminée sous peine de dysfonctionnement. Or les dispersions dues aux tolérances de fabrication font que parfois le capteur n'est pas positionné exactement à la bonne distance de la cible portée par l'arbre à cames, il s'avère donc nécessaire de repositionner après coup les capteurs mal positionnés, ce qui occasionne une augmentation du temps et du coût du montage.

Le but de la présente invention est donc de proposer un dispositif de détection de la position angulaire de l'arbre à cames qui remédie aux inconvénients de l'art antérieur en permettant de garantir le positionnement du capteur à une distance prédéterminée de la cible portée par l'arbre à cames et ce quelles que soient les dispersions dues aux tolérances de fabrication.

Le dispositif de détection de la position angulaire d'un arbre à cames de moteur à combustion interne selon l'invention, est du type comprenant un capteur du type à effet Hall destiné à être monté dans un logement correspondant du moteur pour détecter le passage d'une cible en matériau magnétique solidaire de l'arbre à cames.

Selon l'invention, le dispositif de détection de la position angulaire de l'arbre à cames d'un moteur à combustion interne objet de l'invention est caractérisé en ce que le capteur coopère avec des moyens élastiques de poussée destinés à plaquer le capteur contre la cible lors de la mise en place de ce dernier dans son logement.

Selon une autre caractéristique du dispositif de détection de la position angulaire de l'arbre à cames d'un moteur à combustion interne objet de l'invention, la face du capteur destinée à venir au contact de la cible portée par l'arbre à cames est recouverte d'une couche en matériau amagmétique d'épaisseur prédéterminée.

Selon une autre caractéristique du dispositif de détection de la position angulaire de l'arbre à cames d'un moteur à combustion interne objet de l'invention, la couche recouvrant la face du capteur destinée à venir au contact de la cible est réalisée en matière plastique amagnétique telle que de la bakélite.

Selon une autre caractéristique du dispositif de détection de la position angulaire de l'arbre à cames d'un moteur à combustion interne objet de l'invention, les moyens élastiques de poussée sont formés par un ressort à lame solidaire du corps du capteur s'étendant sur la face opposée à la face destinée à venir au contact de la cible.

Selon une autre caractéristique du dispositif de détection de la position angulaire de l'arbre à cames d'un moteur à combustion interne objet de l'invention, le logement destiné à recevoir le capteur a une forme adaptée permettant le déplacement du capteur contre la cible sous l'action des moyens élastiques de poussée.

On comprendra mieux les buts, aspects et avantages de la présente invention, d'après la description donnée ci-après d'un mode de réalisation de l'invention, ce mode de réalisation étant donné à titre d'exemple non limitatif, en se référant au dessin annexé, dans lequel :

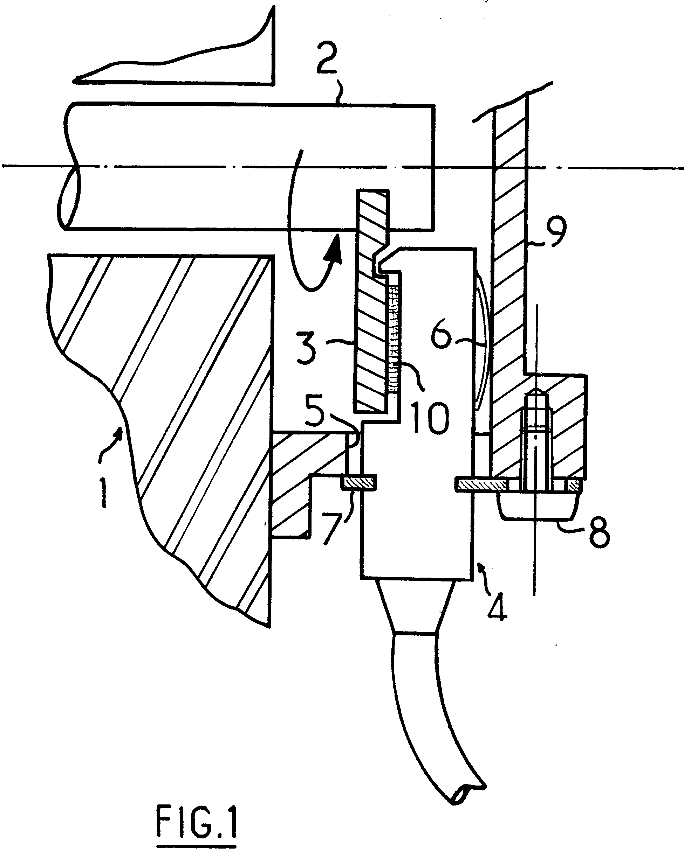

la figure 1 est une vue partielle en coupe axiale d'un dispositif de détection de la position angulaire d'un arbre à cames selon l'invention.

La figure 1 représente donc schématiquement la face supérieure d'une culasse 1 de moteur à combustion interne, seules les parties constitutives du moteur nécessaires à la compréhension de l'invention ont été figurées.

Le moteur à combustion interne, essence ou diesel, est du type à arbre à cames en tête. L'arbre à cames 2 figuré est donc monté sur la culasse 1, d'une manière connue en soi, rotatif dans des paliers non figurés portés par cette dernière. L'une des extrémités axiales de l'arbre à cames 2 porte une cible 3 destinée à coopérer avec capteur à effet Hall 4.

La cible 3 est formée par une portion de disque s'étendant sur environ 180° d'angle. Cette cible qui est réalisée en matériau magnétique doux, coopère donc avec le capteur 4 monté fixe sur la culasse 1, pour délivrer un signal fréquentiel valant "1" pendant la première moitié du cycle moteur, lorsque la cible 3 défile devant le capteur 4, et "0" pendant la seconde moitié. C'est la combinaison de ce signal et du signal délivré par le capteur coopérant avec la cible portée par le vilebrequin qui permet de déterminer le passage au Point Mort Haut admission pour un cylindre de référence.

Le capteur à effet Hall 4 est donc inséré dans un logement correspondant 5 de la culasse ou du couvre-culasse 9 de façon à faire face à la cible 3. Une patte de fixation 7 solidaire du capteur 4 permet de bloquer ce dernier en position au moyen d'une vis 8.

Conformément à l'invention le capteur est muni de moyens élastiques de poussée sous la forme d'une lame métallique élastique 6 formant ressort s'étendant sur une face du capteur 4. Cette lame 6 est destinée à venir en appui avec les parois correspondantes du logement 5 de façon à forcer la face active du capteur 4 au contact de la cible 3 (cette dernière ayant été préalablement positionnée pour faire face au capteur lors d'une opération antérieure du processus de montage) et ce, quelles que soient les tolérances de fabrication relatives aux positionnements du logement 5 d'une part et de la cible 3 d'autre part.

Pour permettre le déplacement du capteur contre la cible 3 sous l'action de la lame 6, le logement 5 à une forme oblongue autorisant le déplacement du capteur 4 dans la direction souhaitée.

Les moyens élastiques de poussée appliquant naturellement le capteur 4 contre la cible 3 sitôt son positionnement dans le logement 5, le serrage de la vis de fixation 8 opérée après l'introduction complète du capteur 4 dans son logement 5 assure donc le blocage du capteur 4 dans cette position.

Pour permettre le fonctionnement de ce dispositif, la face active du capteur destinée à venir au contact de la cible 3 portée par l'arbre à cames 2, est recouverte d'une couche 10 d'épaisseur prédéterminée en matériau amagmétique telle que de la bakélite, définissant la valeur d'entrefer indispensable au bon fonctionnement du capteur.

Le matériau constituant la couche 10 est choisi par ailleurs de façon à réduire au minimum les frottements avec la cible 3 et pour limiter l'usure dans des limites prédéterminées n'affectant pas la valeur de l'entrefer.

Ainsi grâce au dispositif selon l'invention il est possible de garantir la valeur de l'entrefer entre le capteur et sa cible et ce quelles que soient les tolérances de fabrication relatives aux positionnements du logement 5 d'une part et de la cible 3 d'autre part.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

**[1]** Dispositif de détection de la position angulaire d'un arbre à cames (2) de moteur à combustion interne, comprenant un capteur du type à effet Hall (4) destiné à être monté dans un logement (5) correspondant du moteur pour détecter le passage d'une cible (3) en matériau magnétique solidaire dudit arbre à cames (2), caractérisé en ce que le capteur (4) coopère avec des moyens élastiques de poussée (6) destinés à plaquer le capteur contre la cible (3) lors de la mise en place dudit capteur (4) dans son logement (5).

**[2]** Dispositif de détection selon la revendication 1, caractérisé en ce que la face du capteur destinée à venir au contact de la cible (3) portée par l'arbre à cames (2) est recouverte d'une couche (10) en matériau amagmétique d'épaisseur prédéterminée.

**[3]** Dispositif de détection selon la revendication 2, caractérisé en ce que ladite couche (10) est réalisée en matière plastique amagmétique telle que de la bakélite.

**[4]** Dispositif de détection selon l'une quelconque des revendications 1 à 3, caractérisé en ce que lesdits moyens de poussée sont formés par un ressort à lame (6) solidaire du corps du capteur (4) s'étendant sur la face opposée à ladite face destinée à venir au contact de la cible (3).

**[5]** Dispositif de détection selon l'une quelconque des revendications 1 à 4, caractérisé en ce que ledit logement (5) destiné à recevoir le capteur a une forme adaptée permettant le déplacement du capteur contre la cible (3) sous l'action des moyens élastiques de poussée (6).
